(19) Europäisches Patentamt

European Patent Office

Office européen des brevets

(11) **EP 0 886 653 B1**

(12) **EUROPEAN PATENT SPECIFICATION**

(45) Date of publication and mention
of the grant of the patent:
**18.09.2002 Bulletin 2002/38**

(51) Int Cl.⁷: **C08B 9/00**, D01F 2/06,
C08J 5/18

(21) Application number: **97906286.6**

(22) Date of filing: **10.03.1997**

(86) International application number:
**PCT/GB97/00646**

(87) International publication number:
**WO 97/033918 (18.09.1997 Gazette 1997/40)**

(54) **MANUFACTURE OF VISCOSE AND OF ARTICLES THEREFROM**

HERSTELLUNG VON VISKOSE UND VON GEGENSTÄNDEN DARAUS

FABRICATION DE VISCOSE ET D'ARTICLES A PARTIR DE LA VISCOSE

(84) Designated Contracting States:
**AT DE ES FI FR GB IT SE**
Designated Extension States:
**SI**

(30) Priority: **11.03.1996 GB 9605073**

(43) Date of publication of application:
**30.12.1998 Bulletin 1998/53**

(73) Proprietor: **Acordis Kelheim GmbH**
**93309 Kelheim (DE)**

(72) Inventors:
• **HIDASI, Geza**
**D-93049 Regensburg, (DE)**

• **POGGI, Tatjana**
**D-93342 Saal (DE)**

(74) Representative: **Hale, Stephen Geoffrey**
**JY & GW Johnson,**
**Kingsbourne House,**
**229-231 High Holborn**
**London WC1V 7DP (GB)**

(56) References cited:
**DE-A- 2 941 624     GB-A- 1 256 790**
**US-A- 3 728 330**

• **DATABASE WPI Week 9229 Derwent**
**Publications Ltd., London, GB; AN 240338**
**XP002032719 & SU 1 669 916 A (STAVTSOV A K)**
**, 15 August 1991 cited in the application**

## Description

### Field of the Invention

This invention relates to the manufacture of viscose and of articles therefrom, particularly elongate members such as fibres and films.

### Background Art

The viscose process has been known for many years and is described for example in K. Goetze, Chemiefasern nach dem Viskoseverfahren, Springer-Verlag, 3rd edition (1967) (with considerable detail) and in an article entitled "Cellulose" in Ullmann's Encyclopaedia of Industrial Chemistry, VCH Publishing, 5th edition, Volume A5 (1986) (in more general terms).

The conventional steps of the viscose process may be briefly summarised as follows. Dissolving-grade woodpulp (or some other suitable source of cellulose) is steeped in aqueous sodium hydroxide. Excess liquor is removed by pressing to yield alkali cellulose. The alkali cellulose is usually preripened in air for some hours in order to allow oxidative degradation to occur, thereby reducing the degree of polymerisation of the cellulose chains. The alkali cellulose is reacted with carbon disulphide (xanthated) to form cellulose xanthate, which is then dissolved in an aqueous liquor (dilute aqueous sodium hydroxide or water) to form the solution called viscose. The viscose is ripened by storage at or around ambient temperature for some hours, during which time chemical changes, including redistribution of xanthate groups, take place. Other operations, including filtration and deaeration, are also performed on the viscose during this time. In the manufacture of elongate members such as fibres and films, the ripened viscose is then extruded through a die into an aqueous acid bath (usually based on sulphuric acid), where it coagulates, and cellulose is regenerated from the cellulose xanthate. The extrusion process is commonly called spinning in fibre manufacture and casting in film manufacture. The regenerated elongate cellulose member is then washed free of impurities and dried.

In the viscose art, it is customary to express the carbon disulphide content of viscose in terms of the weight of carbon disulphide introduced into the xanthation step as a percentage of the weight of cellulose in the alkali cellulose (% $CS_2$ on CiA). This is sometimes (with less accuracy) referred to as the $CS_2$ content based on the cellulose in the viscose (% $CS_2$ on CiV). The percentage of cellulose in alkali cellulose (% CiA) may be assessed gravimetrically by acidification, washing with water and drying. The percentage of cellulose in viscose (% CiV) may be assessed gravimetrically by regeneration in sulphuric acid, washing with water and drying. The alkalinity of alkali cellulose and of viscose (% SiA and % SiV respectively) may be assessed titrimetrically by a back-titration, in which the material to be analysed is first acidified with a known amount of sulphuric acid and the residual sulphuric acid is then estimated by titration against sodium hydroxide. Alkalinities measured in this manner are usually reported in terms of the corresponding weight percentage of sodium hydroxide. The weight ratio of alkali to cellulose in viscose is commonly called the soda/cellulose ratio or alkali ratio.

Viscose can be used for the manufacture both of standard (regular, conventional) viscose fibre and of a variety of specialised types such as industrial yarn and modal fibres (including polynosic and HWM types), all such fibres being classed generically as viscose rayons. It can also be used for the manufacture of cellulose films and of articles such as food casings and teabags. Such specialised fibres generally demand the use of specialised viscoses, but the other products are generally made using standard (regular, conventional) viscose. In general, the recipes used in the manufacture of standard viscose reflect the desire to minimise costs while maintaining adequate product properties, whereas those used in the manufacture of the specialised types reflect the predominant desire to obtain specific product properties, cost being of secondary importance. It is well-known that product properties are controlled inter alia by viscose parameters at extrusion, including its cellulose content, alkali content, viscosity and degree of ripeness (degree of xanthate substitution, gamma value), and by bath parameters such as sulphuric acid content, sodium sulphate content, zinc sulphate content and temperature. These and other parameters are interdependent, and alteration of one may require alteration to one or more of the others if product properties are to be maintained or optimised.

Efforts have been made over the years to reduce the cost of the viscose process by reducing the quantities of consumable chemicals, including carbon disulphide, sodium hydroxide and sulphuric acid, used therein. As well as the effects on product properties hereinbefore mentioned, it is well-known that the filterability of viscose is affected by (inter alia) the alkalinity of the alkali cellulose and the dissolving liquor and the amount of carbon disulphide used. It is well-known that filterability varies with the amount of carbon disulphide introduced into the xanthation step. The minimum acceptable amount for industrial-scale operation has reduced over the years from about 30-35% or more to about 25-30% $CS_2$ on CiA, consequent upon progressive improvements in woodpulp quality, equipment design, the use of chemical additives, and so forth. Similarly, it is well-known that, if the soda/cellulose ratio is permitted to fall below a certain value, then viscose filterability will be adversely affected. It has been suggested that the optimum soda/cellulose ratio is about 0.83, and indeed ratios of this order are used in the manufacture of some of the specialised types of fibre.

In the manufacture of standard viscose, the minimum soda/cellulose ratio usable in industrial-scale operation has been found to be about 0.55, a value little changed over a number of years.

It is also well-known that viscose quality (i.e. filterability) varies with the amount of hemicellulose present during key steps of its manufacture, notably steeping, xanthation and dissolving. Improved results can be obtained if pure caustic soda is used in the steeping and dissolving steps or if efforts are made to remove hemicellulose from the alkali cellulose before xanthation. Use of pure chemicals may be practical in the laboratory but not in the factory. Processes such as the "double-steeping" or SINI technique described in GB-A-1,256,790 which serve to remove hemicellulose from preripened alkali cellulose have failed to gain commercial acceptance. A considerable proportion of the hemicellulose dissolved during steeping can be incorporated into satisfactory products, e.g. by inclusion in the dissolving liquor, and it would be both commercially and environmentally unsound to discard this material.

DE-A-2,941,624 describes a process for the manufacture of viscose from woodpulp, wherein the woodpulp is irradiated with a dose of high-energy electrons amounting to 1-30 kGy prior to the steeping step and is then steeped in a solution containing less than 19 percent, preferably around 16 percent, by weight sodium hydroxide. This is said to have a number of advantages over conventional processes. The concentration of sodium hydroxide used in the steeping step can be reduced, with the result that savings can be made in sodium hydroxide, carbon disulphide and sulphuric acid consumption. A consequence of reduced carbon disulphide use is reduced environmental pollution arising from carbon disulphide and hydrogen sulphide liberated during regeneration and washing. With a suitably-chosen degree of irradiation, the preripening step can be omitted. Examples are given of the preparation of viscoses of good filterability using between 24 and 28 percent $CS_2$ on CiV, the product containing 8 percent by weight cellulose and 5.3 or 5.8 percent by weight alkali (soda/cellulose ratio 0.66 or 0.73). SU-A-1,669,916 describes the use of lesser amounts of $CS_2$ in such a process. Examples are given of the preparation of viscoses of satisfactory filterability using 9.3 to 23.1% $CS_2$ on CiA and containing 8.4 per cent by weight cellulose and 6.4 percent by weight alkali (soda/cellulose ratio 0.76).

Disclosure of the Invention

It is an object of the present invention to provide a means of reducing the cost of the viscose process, in particular in the manufacture of film and standard viscose rayon fibre on the industrial scale.

According to the invention there is provided a process for the manufacture of viscose comprising the steps of:

(a) irradiating dissolving-grade woodpulp with a high-energy beam at a dose or 1-30 kGy, preferably 7-23 kGy;

(b) steeping the irradiated woodpulp in an aqueous liquor comprising from 14 to 20 percent by weight sodium hydroxide and from 0.1 to 5 percent by weight hemicellulose;

(c) pressing the steeped irradiated woodpulp to form alkali cellulose;

(d) xanthating the alkali cellulose to form cellulose xanthate; and

(e) dissolving the cellulose xanthate in an aqueous liquor to form viscose,

characterised in that the soda/cellulose ratio in the viscose is in the range 0.35 to 0.50, preferably 0.37 to 0.45. It has surprisingly been found that viscose manufactured according to the invention is of good filterability.

According to the invention there is further provided a process for the manufacture of an elongate cellulose member which comprises the steps of:

(a) irradiating dissolving-grade woodpulp with a high-energy beam at a dose of 1-30 kGy, preferably 7-23 kGy;

(b) steeping the irradiated woodpulp in an aqueous liquor comprising from 14 to 20 percent by weight sodium hydroxide and from 0.1 to 5 percent by weight hemicellulose;

(c) pressing the steeped irradiated woodpulp to form alkali cellulose;

(d) xanthating the alkali cellulose to form cellulose xanthate;

(e) dissolving the cellulose xanthate in an aqueous liquor to form viscose;

(f) extruding the viscose through a die into an acid bath wherein the viscose is coagulated and regenerated to form an elongate cellulose member; and

(g) washing and drying the elongate cellulose member,

characterised in that the soda/cellulose ratio in the viscose is in the range 0.35 to 0.50, preferably 0.37 to 0.45. The elongate member may take the form of fibre or film. It has surprisingly been found that elongate members can readily be made according to the invention without major modification of other viscose and acid bath parameters; and that such elongate members can have properties comparable to those of elongate members made by wholly conventional techniques, which do not utilise step (a) and in which the soda/cellulose ratio in the viscose is about 0.55 to 0.6.

The woodpulp may be hardwood or softwood, produced by conventional processes such as the sulphate or sulphite processes. It usually contains at least 85 percent, often 90 to 98 percent, by weight alpha-cellulose. Other sources of dissolving-grade cellulose may also be used. Irradiation is effected using ionising radiation, preferably an electron beam, although other energy sources such as gamma rays may also be used. Irradiation may conveniently be performed using an isodose technique, that is to say on a stack of sheets of woodpulp of such a thickness that the dosage to which the surfaces nearer to and more remote from the source of radiation are subjected is of comparable magnitude, for example about 5 cm thick. Secondary electrons generated inside the woodpulp stack serve to increase the dosage to which the more remote parts of the stack are subjected.

Steeping may be performed in any conventional manner, for example sheet steeping or slurry steeping, at a temperature appropriate for the chosen process. The steeping liquor comprises 14 to 20, often 15 to 17, percent by weight sodium hydroxide and 0.1 to 5, often 0.5 to 3.0, percent by weight hemicellulose (i.e. dissolved oxidisable material including beta- and gamma-celluloses, which can be assessed by dichromate oxidation). The concentration of sodium hydroxide in the steeping liquor in the process of the invention may advantageously be somewhat lower, for example 1 to 2 percent lower, than with unirradiated woodpulp. The alkali cellulose preferably comprises 28 to 38, further preferably 32 to 35, percent by weight cellulose and 13 to 16 percent by weight alkali (expressed as NaOH). The alkali cellulose may be preripened before xanthation if desired; however, no preripening step is required if the appropriate radiation dose is used. Accordingly, there is in general no need to include a preripening catalyst in the steeping liquor. The degree of polymerisation (D.P.) of the cellulose introduced into the xanthation step is preferably in the range 200 to 500, more preferably 250 to 450. The degree of polymerisation (D.P.) of cellulose is conveniently assessed by viscosimetry of a dilute solution of cellulose in an aqueous metal/amine complex solvent, for example cuprammonium hydroxide solution. A suitable method, based on TAPPI Standard T206, is described hereinafter as Test Method 1. Cellulose D.P. is a measure of the number of anhydroglucose units per molecule. It will be understood that D.P. measured in this manner is a viscosity average D.P. The xanthation step may be performed batchwise or continuously, in any conventional manner. The amount of carbon disulphide introduced into the xanthation step may be in the range 15 to 30%, preferably 15 to 25%, by weight on CiA. Use of reduced levels of $CS_2$ in the process of the invention is advantageous not only in cost terms but also in that it may be found that a lower proportion of the added $CS_2$ is converted into $H_2S$-generating byproducts. The aqueous dissolving liquor typically comprises 0 to 3.0, often 0.5 to 2.5, percent by weight sodium hydroxide. The dissolving liquor may be water. It may also contain 0 to 1.0, often 0.1 to 1.0, percent by weight dissolved cellulosic material, originating from hemicellulose dissolved in the steeping liquor (which is in common practice diluted to produce the dissolving liquor) and/or from recycled viscose (e.g. recovered from filters). The viscose typically contains 7 to 11, preferably 8 to 10, percent by weight cellulose. It has surprisingly been found that good quality viscose can be made using both 15-25% $CS_2$ on CiA and a soda/cellulose ratio of 0.35-0.50.

As previously stated, it is common practice to extract a proportion of the liquor from the steeping circuit and dilute it to provide the dissolving liquor. It will be appreciated that the dissolving liquor used in the process of the invention in general contains a lower concentration of sodium hydroxide than that used in conventional methods and that accordingly a lower proportion of steeping liquor may require to be extracted. The equilibrium concentration of hemicellulose in the steeping liquor may therefore tend to be higher when the process of the invention is used than is the case with conventional methods. It may therefore be desirable to remove hemicellulose from the steeping liquor circuit in order to prevent its concentration from rising to an undesirably high equilibrium value. Techniques for removal of excess hemicellulose from steeping liquors are known and include dialysis and reverse osmosis.

Viscose prepared by the process of the invention may additionally comprise conventional additives, for example surfactants which assist in the steeping, xanthation and dissolving steps, and viscose additives such as poly (alkylene glycols) and amines which serve as spinning modifiers.

It is generally necessary to store viscose before regeneration until it has achieved a desired degree of ripeness (which may be assessed by techniques such as salt figure, Hottenroth number and gamma-value measurement). It will be appreciated that use of a relatively low amount of $CS_2$ results in a relatively low initial gamma-value, so that it may be necessary carefully to control ripening time and temperature in order to avoid overripening. In such a case, it may be beneficial to inject liquid $CS_2$ into the viscose shortly before extrusion in order to raise its gamma-value. This procedure has the advantage that $CS_2$ introduced in this way reacts with cellulose with a high degree of efficiency and with low byproduct formation, so that the overall consumption of $CS_2$ is less than in conventional practice. The liquid $CS_2$ is preferably mixed into the viscose by means of a barrel or suchlike mixer. The amount of $CS_2$ thereby injected may be in the range 0.1 to 2.0% on CiV.

Viscose prepared by the invention can be handled and subjected to conventional processing operations such as filtration and deaeration in conventional manner and spun or cast on conventional equipment. It may be found desirable to reduce the acidity of the regeneration bath to compensate for the reduced alkalinity of viscose made by the process of the invention compared with conventional viscoses, but in general it has surprisingly been found that little alteration is necessary to standard spinning conditions in order to produce satisfactory products. Typical standard spinbaths for the manufacture of standard fibre comprise 7 to 12 percent by weight sulphuric acid, 0.5 to 3 percent by weight zinc sulphate and 12 to 30, often 20 to 30, percent by weight sodium sulphate; typical casting baths for the manufacture of film are similar, but with the omission of zinc sulphate. The extruded elongate member may be washed, finished, dried and collected in conventional manner.

**Test Method 1 - Measurement of Cuprammonium Solution Viscosity and D.P.**

This test is based on TAPPI Standard T206 os-63. Cellulose is dissolved in cuprammonium hydroxide solution containing $15\pm0.1$ g/l copper and $200\pm5$ g/l ammonia, with nitrous acid content < 0.5 g/l, (Shirley Institute standard) to give a solution of accurately-known cellulose concentration (about 1%). Solution flow time through a Shirley viscometer at 20°C is measured, from which viscosity may be calculated in standard manner. Viscosity average D.P. is determined using the empirical equation:

$$D.P. = 412.4285 \ln [ 100(t-k/t) / n.C ] - 348$$

where t is flow time in seconds, k the gravity constant, C the tube constant, and n the density of water in g/ml at the temperature of the test (0.9982 at 20°C).

The invention is illustrated by the following Examples, in which parts and proportions are by weight unless otherwise specified. Experiments where the hemicellulose concentration is given as O are comparative.

**Example 1**

Dissolving-grade woodpulp was irradiated by a high-energy electron beam to give D.P. 370. 300 g samples of the irradiated woodpulp were slurry-steeped and the slurry centrifuged to yield alkali cellulose (32-33% cellulose, 14.5-15.5% NaOH). The NaOH concentration of the steeping liquor was 200 g/l, and the temperature was 40°C. The samples were xanthated and dissolved to yield viscose. The liquor used for dissolving was diluted sodium hydroxide except in Sample 4 where water was used.

A control sample of non-irradiated woodpulp was steeped in liquor comprising 240 g/l NaOH at 40°C and preripened to give D.P. 370. The sample was xanthated and dissolved in diluted sodium hydroxide to yield viscose. Further experimental details and average results are given in Table 1:

Table 1

| No. of Trial | Hemi g/l | $CS_2$ on CiA% | CiV % | SiV % | A.R. | B.F. sec | °Hott | Kw | C.C. |
|---|---|---|---|---|---|---|---|---|---|
| Control | 0 | 32 | 9.02 | 5.01 | 0.55 | 62 | 6.6 | 216 | 3720 |
| 1 | 17.7 | 24 | 9.28 | 3.96 | 0.42 | 61 | 4.5 | 450 | 5760 |
| 2 | 30 | 24 | 9.49 | 3.62 | 0.38 | 64 | 3.8 | 287 | 6090 |
| 3 | 0 | 18 | 9.02 | 3.72 | 0.41 | 54 | 3.3 | 360 | 6840 |
| 4 | 4.4 | 18 | 9.16 | 3.45 | 0.37 | 64 | 3.4 | 360 | 6165 |

Hemi g/l represents the concentration of hemicellulose in the steeping liquor. A.R. stands for alkali ratio (SiV % divided by CiV %). B.F. represents viscose viscosity measured by the falling ball method at 30°C. °Hott represents the ripeness of the freshly-made viscose measured by the Hottenroth method using 15% ammonium chloride. Kw represents filterability, lower values representing better quality viscose. C.C. represents undissolved particles >8 micrometer in size per ml viscose measured using a Coulter Counter (Trade Mark of Coulter Electronics Limited) on samples consisting of 1 part viscose and 4 parts highly-filtered 6% NaOH solution.

Samples 1 to 4 exhibit a slightly poorer filterability than the control, nevertheless all samples can be considered to be of very good filterability.

Sample 1 and the control were spun through the standard spinnerettes used in viscose fibre production at 50 m/min into the standard spinbath, stretched, cut to form staple fibre with a final denier of 1.3 dtex, washed and dried. Spinning stability was good. Both samples possessed similar fibre properties (including tenacity and extensibility) to fibres produced on the production scale.

## Example 2

Dissolving-grade woodpulp (SAICCOR, Trade Mark of SAPPI-SAICCOR (Pty.) Ltd.) (130 tonne) was irradiated by a high-energy electron beam (15.5 kGy surface dose) to give D.P. 370 (Pulp A). A second sample (20 tonne) was irradiated (19 kGy surface dose) to give D.P. 350 (Pulp B). The irradiated woodpulp was slurry-steeped and the slurry pressed on a rotary press to yield alkali cellulose (nominally 32-35% cellulose, 14-16% NaOH). A non-irradiated control sample and Pulp A were steeped in liquor comprising 16% NaOH and 20 g/l hemicellulose at 40°C; Pulp B was steeped in liquor comprising 16% NaOH and 30 g/l hemicellulose at 50°C. The alkali cellulose was xanthated batchwise, after conventional preripening in the case of the control sample but without preripening in the case of Pulps A and B, and dissolved in dilute sodium hydroxide to yield viscose. The irradiated pulps appeared to demand an increased xanthation time, despite the reduced $CS_2$ level. Further experimental details and average results are given in Table 2:

Table 2

| Pulp | No. of batches | $CS_2$ on CiA % | CiV % | SiV % | A.R. | B.F. sec | S.F. | Kw | C.C. |
|---|---|---|---|---|---|---|---|---|---|
| Control | - | 31.0-32.0 | 8.8 | 5.2 | 0.59 | 40-45 | - | - | 8000-12000 |
| Control | 11 | 29.7 | 9.05 | 5.58 | 0.61 | 40 | 5.8 | 810 | 14600 |
| Control | 20 | 25.9 | 8.96 | 5.29 | 0.59 | 44 | 5.1 | 1310 | 17800 |
| A | 18 | 23.5 | 8.86 | 4.06 | 0.46 | 51 | 5.8 | 830 | 8800 |
| A | 9 | 21.7 | 8.83 | 4.18 | 0.47 | 51 | 5.4 | 820 | 9600 |
| B | 40 | 21.9 | 9.33 | 4.51 | 0.48 | 45 | 5.7 | 830 | 12200 |

A.R. stands for alkali ratio (SiV % divided by CiV %). B.F. represents viscose viscosity measured by the falling ball method at 30°C. S.F. represents the salt figure (ripeness measured by the sodium chloride method) of the freshly-made viscose. Kw represents filterability, lower values representing better quality viscose. C.C. represents undissolved particles > 8 micrometer in size per ml viscose measured using a Coulter Counter (Trade Mark of Coulter Electronics Limited) on samples consisting of 1 part viscose and 4 parts highly-filtered 6% NaOH solution.

Samples of viscose produced from irradiated and non-irradiated pulps were assessed at 0, 6 and 12 hours age for conversion of $CS_2$ into $H_2S$-generating byproducts. The results shown in Table 3 were obtained:

Table 3

| Pulp | $CS_2$ on CiA % | Conversion of $CS_2$ into $H_2S$ % | | |
|---|---|---|---|---|
| | | 0 hours | 6 hours | 12 hours |
| Control | 31 | 11.9 | 16.7 | - |
| Irradiated | 22 | 7.8 | 12.1 | 15.2 |

Thus at any given time not only was a lower absolute amount of $H_2S$ obtained from viscose made according to the invention, but also a lower proportion of the $CS_2$ was converted into $H_2S$-generating substances. This has marked advantages from both the economic and the environmental standpoints.

The viscose was ripened for 10-12 hours, filtered, deaerated and spun into 1.3 dtex fibre in conventional manner. Factory filter blockage performance with the Pulp A and Pulp B viscoses was comparable to that with the control viscose made using 31-32% $CS_2$ on CiA.

The viscoses were spun through the standard spinnerettes at 50-70 m/min into baths containing 8.0-9.5% $H_2SO_4$, 0.6-0.9% $ZnSO_4$ and 23.5-28.0% $Na_2SO_4$, stretched, cut to form staple fibre, washed and dried. The nominal fibre D.P. for the Control and Pulp A samples was 310, for Pulp B samples 280.

Spinning stability and quality were good throughout. The salt figure of viscose at spinning was low and variable in the Pulp A and Pulp B experiments, as a consequence of operating at low production rate under trial conditions (ripening time 10-12 hours compared with 6 hours during conventional operation). The fibre produced by the process of the invention nevertheless exhibited satisfactory tensile properties, cohesion and dye affinity. The purity of the former fibre (as measured by foaming propensity, pH, and aqueous and organic extraction), its water imbibition and its sink time were equivalent to those of conventionally-produced fibre.

## Example 3

Single-batch experiments were carried out during the course of the trial described in Example 2 under the conditions and with the results given in Table 4. Xanthate was dissolved in water in order to obtain the minimum possible soda/cellulose ratio.

Table 4

| Pulp | $CS_2$ on CiA % | CiV% | SiV% | A.R. | B.F. sec | S.F. | Kw | C.C. |
|------|------|------|------|------|------|------|------|------|
| A | 23.4 | 8.96 | 3.33 | 0.37 | 52 | 6.3 | - | 9300 |
| B | 19.3 | 9.28 | 4.16 | 0.45 | 52 | 4.0 | 1020 | 11400 |
| B | 18.5 | 9.24 | 4.06 | 0.44 | 52 | 4.0 | 970 | 6000 |
| B | 21.7 | 9.77 | 4.27 | 0.44 | 69 | 5.2 | 490 | 5800 |

## Claims

1.   A process for the manufacture of viscose comprising the steps of:-

   (a) irradiating dissolving-grade woodpulp with a high-energy beam at a dose of 1-30 kGy;
   (b) steeping the irradiated woodpulp in an aqueous liquor comprising from 14 to 20 percent by weight sodium hydroxide and from 0.1 to 5 percent by weight hemicellulose;
   (c) pressing the steeped irradiated woodpulp to form alkali cellulose;
   (d) xanthating the alkali cellulose to form cellulose xanthate; and
   (e) dissolving the cellulose xanthate in an aqueous liquor to form viscose,

   **characterised in that** the soda/cellulose ratio in the viscose is in the range 0.35 to 0.50.

2.   A process according to claim 1, **characterised in that** the soda-cellulose ratio in the viscose is in the range 0.37 to 0.45.

3.   A process according to claim 1 or claim 2, **characterised in that** the dissolving-grade woodpulp is irradiated in step (a) with a high-energy beam at a dose of 7-23 kGy.

4.   A process according to any preceding claim, **characterised in that** the aqueous sodium hydroxide introduced into step (b) has a hemicellulose content in the range 0.5 to 3 percent by weight.

5.   A process according to any preceding claim, **characterised in that** the amount of carbon disulphide introduced into the xanthation step (d) is in the range 15 to 25 percent by weight, based on the weight of cellulose in the alkali cellulose.

6.   A process according to any preceding claim, **characterised in that** the aqueous liquor used in step (e) is water.

7.   A process according to any preceding claim, **characterised in that** the viscose has a cellulose content in the range 7 to 11 percent by weight.

8.   A process according to claim 7, **characterised in that** the viscose has a cellulose content in the range 8 to 10 percent by weight.

9.   A process for the manufacture of an elongate cellulose member comprising the steps of:-

   (a) irradiating dissolving-grade woodpulp with a high-energy beam at a dose of 1-30 kGy;

(b) steeping the irradiated woodpulp in an aqueous liquor comprising from 14 to 20 percent by weight sodium hydroxide and from 0.1 to 5 percent by weight hemicellulose;
(c) pressing the steeped irradiated woodpulp to form alkali cellulose;
(d) xanthating the alkali cellulose to form cellulose xanthate;
(e) dissolving the cellulose xanthate in an aqueous liquor to form viscose;
(f) extruding the viscose through a die into an acid bath wherein the viscose is coagulated and regenerated to form an elongate cellulose member; and
(g) washing and drying the elongate cellulose member,

**characterised in that** the soda cellulose ratio in the viscose is in the range 0.35 to 0.50.

10. A process according to claim 9, **characterised in that** the soda/cellulose ratio in the viscose is in the range 0.37 to 0.45.

11. A process according to claim 9 or claim 10, **characterised in that** the dissolving-grade woodpulp is irradiated in step (a) with a high-energy beam at a dose of 7-23 kGy.

12. A process according to any one of claims 9 to 11, **characterised in that** the amount of carbon disulphide introduced into the xanthation step (d) is in the range 15 to 25 percent by weight based on the weight of cellulose in the alkali cellulose.

13. A process according to any one of claims 9 to 12, **characterised in that** the aqueous liquor used in step (e) is water.

14. A process according to any one of claims 9 to 13, **characterised in that** carbon disulphide is injected into the viscose prior to the extrusion step (f).

15. A process according to any one of claims 9 to 14, **characterised in that** the elongate cellulose member is standard viscose rayon fibre.

## Patentansprüche

1. Verfahren zur Herstellung von Viskose, bei dem man:

(a) Chemiezellstoff mit energiereichen Strahlen in einer Dosis von 1-30 kGy bestrahlt,

(b) den bestrahlten Zellstoff in einer wäßrigen Flüssigkeit, enthaltend 14 bis 20 Gewichtsprozent Natriumhydroxid und 0,1 bis 5 Gewichtsprozent Hemicellulose, alkalisiert,

(c) die Alkalicellulose in abpresst,

(d) die Alkalicellulose xanthogeniert und

(e) das Cellulosexanthogenat in einer wäßrigen Flüssigkeit unter Viskosebildung löst,

**dadurch gekennzeichnet, daß** die Viskose ein Alkaliverhältnis im Bereich von 0,35 bis 0,50 aufweist.

2. Verfahren nach Anspruch 1, **dadurch gekennzeichnet, daß** die Viskose ein Alkaliverhältnis im Bereich von 0,37 bis 0,45 aufweist.

3. Verfahren nach Anspruch 1 oder Anspruch 2, **dadurch gekennzeichnet, daß** man den Chemiezellstoff in Schritt (a) mit den energiereichen Strahlen in einer Dosis von 7-23 kGy bestrahlt.

4. Verfahren nach einem der vorhergehenden Ansprüche, **dadurch gekennzeichnet, daß** man in Schritt (b) mit einer einen Hemicellulosegehalt im Bereich von 0,5 bis 3 Gewichtsprozent aufweisenden Natronlauge alkalisiert.

5. Verfahren nach einem der vorhergehenden Ansprüche, **dadurch gekennzeichnet, daß** man in Schritt (d) mit 15 bis 25 Gewichtsprozent, bezogen auf das Gewicht der Cellulose in der Alkalicellulose, Schwefelkohlenstoff xanthogeniert.

**6.** Verfahren nach einem der vorhergehenden Ansprüche, **dadurch gekennzeichnet, daß** man in Schritt (e) als wäßrige Flüssigkeit Wasser einsetzt.

**7.** Verfahren nach einem der vorhergehenden Ansprüche, **dadurch gekennzeichnet, daß** die Viskose einen Cellulosegehalt im Bereich von 7 bis 11 Gewichtsprozent aufweist.

**8.** Verfahren nach Anspruch 7, **dadurch gekennzeichnet, daß** die Viskose einen Cellulosegehalt im Bereich von 8 bis 10 Gewichtsprozent aufweist.

**9.** Verfahren zur Herstellung eines länglichen Cellulosekörpers, bei dem man:

(a) Chemiezellstoff mit energiereichen Strahlen in einer Dosis von 1-30 kGy bestrahlt,

(b) den bestrahlten Zellstoff in einer wäßrigen Flüssigkeit, enthaltend 14 bis 20 Gewichtsprozent Natriumhydroxid und 0,1 bis 5 Gewichtsprozent Hemicellulose, alkalisiert,

(c) die Alkalicellulose in abpresst,

(d) die Alkalicellulose xanthogeniert und

(e) das Cellulosexanthogenat in einer wäßrigen Flüssigkeit unter Viskosebildung löst,

(f) die Viskose über eine Düse in ein Säurebad extrudiert, darin koaguliert und unter Bildung eines länglichen Cellulosekörpers regeneriert und

(g) den länglichen Cellulosekörper wäscht und trocknet,

**dadurch gekennzeichnet, daß** die Viskose ein Alkaliverhältnis im Bereich von 0,35 bis 0,50 aufweist.

**10.** Verfahren nach Anspruch 9, **dadurch gekennzeichnet, daß** die Viskose ein Alkaliverhältnis im Bereich von 0,37 bis 0,45 aufweist.

**11.** Verfahren nach Anspruch 9 oder Anspruch 10, **dadurch gekennzeichnet, daß** man den Chemiezellstoff in Schritt (a) mit den energiereichen Strahlen in einer Dosis von 7-23 kGy bestrahlt.

**12.** Verfahren nach einem der Ansprüche 9 bis 11, **dadurch gekennzeichnet, daß** man in Schritt (d) mit 15 bis 25 Gewichtsprozent, bezogen auf das Gewicht der Cellulose in der Alkalicellulose, Schwefelkohlenstoff xanthogeniert.

**13.** Verfahren nach einem der Ansprüche 9 bis 12, **dadurch gekennzeichnet, daß** man in Schritt (e) als wäßrige Flüssigkeit Wasser einsetzt.

**14.** Verfahren nach einem der Ansprüche 9 bis 13, **dadurch gekennzeichnet, daß** man die Viskose vor dem Extrusionsschritt (f) mit Schwefelkohlenstoff versetzt.

**15.** Verfahren nach einem der Ansprüche 9 bis 14, **dadurch gekennzeichnet, daß** man als länglichen Cellulosekörper eine normale Viskosereyonfaser herstellt.

**Revendications**

**1.** Procédé de fabrication de viscose comprenant les étapes suivantes:

(a) irradiation d'une pulpe de bois de type soluble avec un faisceau à haute énergie à une dose de 1 à 30 kGy;
(b) macération de la pulpe de bois irradiée dans une liqueur aqueuse comprenant de 14 à 20 pour cent en poids d'hydroxyde de sodium et de 0,1 à 5 pour cent en poids d'hémicellulose;

(c) pressage de la pulpe de bois irradiée macérée afin de former de la cellulose alcaline;
(d) traitement de la cellulose alcaline au xanthate de manière à former du xanthate de cellulose; et
(e) dissolution du xanthate de cellulose dans une liqueur aqueuse afin de former de la viscose,

**caractérisé en ce que** le rapport soude/cellulose dans la viscose se situe dans la plage allant de 0,35 à 0,50.

2. Procédé selon la revendication 1, **caractérisé en ce que** le rapport soude/cellulose dans la viscose se situe dans la plage allant de 0,37 à 0,45.

3. Procédé selon la revendication 1 ou la revendication 2, **caractérisé en ce que** la pulpe de bois de type soluble est irradiée dans l'étape (a) avec un faisceau à haute énergie à une dose de 7 à 23 kGy.

4. Procédé selon l'une quelconque des revendications précédentes, **caractérisé en ce que** l'hydroxyde de sodium aqueux introduit dans l'étape (b) présente une teneur en hémicellulose se situant dans la plage allant de 0,5 à 3 pour cent en poids.

5. Procédé selon l'une quelconque des revendications précédentes, **caractérisé en ce que** la quantité de bisulfure de carbone introduite dans l'étape de traitement au xanthate (d) se situe dans la plage allant de 15 à 25 pour cent en poids, sur base du poids de cellulose dans la cellulose alcaline.

6. Procédé selon l'une quelconque des revendications précédentes, **caractérisé en ce que** la liqueur aqueuse utilisée dans l'étape (e) est l'eau.

7. Procédé selon l'une quelconque des revendications précédentes, **caractérisé en ce que** la viscose présente une teneur en cellulose se situant dans la plage allant de 7 à 11 pour cent en poids.

8. Procédé selon la revendication 7, **caractérisé en ce que** la viscose présente une teneur en cellulose se situant dans la plage allant de 8 à 10 pour cent en poids.

9. Procédé pour la fabrication d'un élément de cellulose allongé, comprenant les étapes suivantes:

(a) irradiation d'une pulpe de bois de type soluble avec un faisceau à haute énergie à une dose de 1 à 30 kGy;
(b) macération de la pulpe de bois irradiée dans une liqueur aqueuse comprenant de 14 à 20 pour cent en poids d'hydroxyde de sodium et de 0,1 à 5 pour cent en poids d'hémicellulose;
(c) pressage de la pulpe de bois irradiée macérée afin de former de la cellulose alcaline;
(d) traitement de la cellulose alcaline au xanthate de manière à former du xanthate de cellulose;
(e) dissolution du xanthate de cellulose dans une liqueur aqueuse afin de former de la viscose,
(f) extrusion de la viscose à travers une filière dans un bain acide dans lequel la viscose est coagulée et régénérée, de manière à former un élément de cellulose allongé; et
(g) lavage et séchage de l'élément de cellulose allongé,

**caractérisé en ce que** le rapport soude/cellulose dans la viscose se situe dans la plage allant de 0,35 à 0,50.

10. Procédé selon la revendication 9, **caractérisé en ce que** le rapport soude/cellulose dans la viscose se situe dans la plage allant de 0,37 à 0,45.

11. Procédé selon la revendication 9 ou la revendication 10, **caractérisé en ce que** la pulpe de bois de type soluble est irradiée dans l'étape (a) avec un faisceau à haute énergie à une dose de 7 à 23 kGy.

12. Procédé selon l'une quelconque des revendications 9 à 11, **caractérisé en ce que** la quantité de disulfure de carbone introduite dans l'étape de traitement au xanthate (d) se situe dans la plage allant de 15 à 25 pour cent en poids, sur base du poids de cellulose dans la cellulose alcaline.

13. Procédé selon l'une quelconque des revendications 9 à 12, **caractérisé en ce que** la liqueur aqueuse utilisée dans l'étape (e) est l'eau.

14. Procédé selon l'une quelconque des revendications 9 à 13, **caractérisé en ce que** le disulfure de carbone est injecté dans la viscose avant l'étape d'extrusion (f).

15. Procédé selon l'une quelconque des revendications 9 à 14, **caractérisé en ce que** l'élément de cellulose allongé est une fibre de rayonne de viscose standard.